# EUROPEAN PATENT SPECIFICATION

(11) **EP 2 784 887 B1**
(45) Date of publication and mention of the grant of the patent: **14.09.2016**
(21) Application number: 14001108.1
(22) Date of filing: 26.03.2014
(51) Int. Cl.: H02G 3/06

(54) **Cable gland assembly for electrical apparatus**
Kabelverschraubungsanordnung für elektrische Vorrichtung
Ensemble presse-étoupe pour appareil électrique

(30) Priority: 28.03.2013 IT MI20130472
(43) Date of publication of application: 01.10.2014
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A1- 0 381 980
- EP-A1- 0 528 233
- EP-A2- 0 203 263
- EP-A2- 0 598 261
- EP-A2- 1 783 876
- WO-A1-02/086371
- WO-A1-2012/072318
- WO-A2-2004/097271
- DE-A1- 1 750 095
- DE-A1- 3 109 583
- DE-A1- 3 417 882
- DE-U1- 8 400 007
- DE-U1- 29 700 685
- US-A- 5 927 892
- US-A1- 2009 174 154

## Description

The present invention relates to a cable gland assembly for an electrical apparatus.

The present invention relates to an advanced sealing system that is adapted to retain a cable in position for connection to electrical devices such as in particular sockets and plugs of the industrial type.

As is known, sockets and plugs of the industrial type are used in the most disparate environments, often characterized by having very severe atmospheric and environmental conditions.

Typical examples of such environments are building yards, ports, mines, camping sites, all installations where the sockets and plugs are used outdoors or in any case in extreme environmental conditions and are often located on the ground, where therefore they can be subjected to external environmental agents, such as dust, puddles, rain, waves, impacts, falls, etc., situations that are worsened by the adverse atmospheric conditions linked to the variation of temperature and humidity.

It is therefore very important to provide these products with a high resistance to such agents, so that the correct operation of the sockets and of the plugs is not compromised.

For example, the penetration of humidity in the sockets may entail a progressive deterioration of the metallic parts, with consequent future malfunctions.

Also, conditions of extreme danger may arise for their users, linked for example to short-circuits or overheating that may increase the risk of fire.

For this reason, international standards have adopted a system for classifying electrical devices with respect to external agents, such as water and dust, which is known universally as IP rating.

This system substantially consists of two digits: the first one indicates the ability of the enclosure to withstand the penetration of solid objects and dust, while the second digit indicates the ability thereof to oppose the penetration of water.

For example, an IP67 rating indicates the ability of an enclosure to withstand penetration of dust and water when the socket is temporarily immersed in water, for example in a puddle.

Recently, a new classification has been added to traditional ratings and relates to resistance to the steam jets that are often used to clean sockets, especially in environments such as car washes and/or sites where food products are managed and processed, such as butcher's shops, food processing industries, etc.

For this reason, it becomes fundamental to provide sockets capable of giving the highest assurance of resistance to these external agents, i.e., capable of passing the approval tests defined by international standards.

In order to achieve this result it is not possible to act on the dimensional characteristics of the object, since they are substantially defined by international standards in order to ensure the interchangeability and correct connection between the socket and the plug.

It becomes very important, therefore, to work on the cable entry region, because it is the most critical area, since it is characterized by the presence of an opening, which is required to allow the correct placement of the conductors and their connection to the internal terminals of the socket or plug.

In fact, if the body of the socket and plug and the electrical cable do not mutually adhere perfectly, a gap is created which can constitute a region of passage through which water and/or dust can enter the device.

A further critical element is the fact that this type of socket is very often assembled on site, directly by the electrical installation technician, who disassembles the socket and performs the appropriate connection.

Therefore, it becomes important to ensure that this operation occurs in a facilitated manner and without the possibility of errors.

Various sealing systems have been provided in the past which are adapted to ensure the tightness of the system and the retention of the power supply cable.

Many of these methods use systems based on cable pressers or cable glands, which are pressed against the cable by virtue of different systems.

For example, in some cases the tightness of the system and the retention of the cable are achieved with the aid of a cable retainer, which is closed around the cable by means of a screw closure.

Such system does not allow a perfect seal of the cable, especially when the diameter of the cable varies, and also has the drawback of requiring the use of a tool.

EP1178574 discloses an industrial socket/plug with a system for retaining the cable in position which includes a protrusion, provided on the grip body, which provides a narrower area adapted to lock the cable in position. Such sealing system is effective, but it has limitations as regards its adaptability to cables having different diameters.

EP598261 discloses a cable gland having a metal threaded sleeve, a mating sleeve and a clamping insert, which can be pressed against the cable by screwing up the threaded sleeve and the mating sleeve. The clamping insert is provided with a sleeve-like annular seal in the vicinity of clamping fingers. The clamping insert further has an undercut for holding the seal.

The construction of EP598261, which discloses a cable gland assembly according to the preamble of claim 1, requires a number of components with complicated shapes in order to ensure a proper seal against water and moisture.

The aim of the present invention is to provide a cable gland assembly, particularly for sockets and plugs of the industrial type, that overcomes the drawbacks of the cited prior art.

Within the scope of this aim, an object of the invention is to provide a cable gland assembly that is capable of ensuring maximum tightness against external agents such as water, steam and dust.

Another object of the invention is to provide a cable gland assembly that allows simple installation without the aid of any tool and without the possibility of error by the installation technician.

Another object is to provide a cable gland assembly that is capable of accommodating power supply conductor cables with a broad range of diameters.

Another object of the present invention is to provide a cable gland that ensures mechanical retention of the cable, so that it is not affected by mechanical stresses linked to excessive traction force.

A further object of the invention is to provide a cable gland assembly that is compact and can be accommodated within the same enclosure as the object to be connected.

Another object of the present invention is to provide an assembly which, by virtue of its particular constructive characteristics, is capable of giving the greatest assurances of reliability and safety in use.

Another object of the present invention is to provide an assembly that can be easily manufactured with a reduced number of component parts.

This aim and these and other objects that will become better apparent hereinafter are achieved by a cable gland assembly, particularly for industrial plugs and sockets, as claimed in the appended claims.

Further characteristics and advantages will become better apparent from the description of preferred but not exclusive embodiments of the invention, illustrated by way of non-limiting example in the accompanying drawings, wherein:

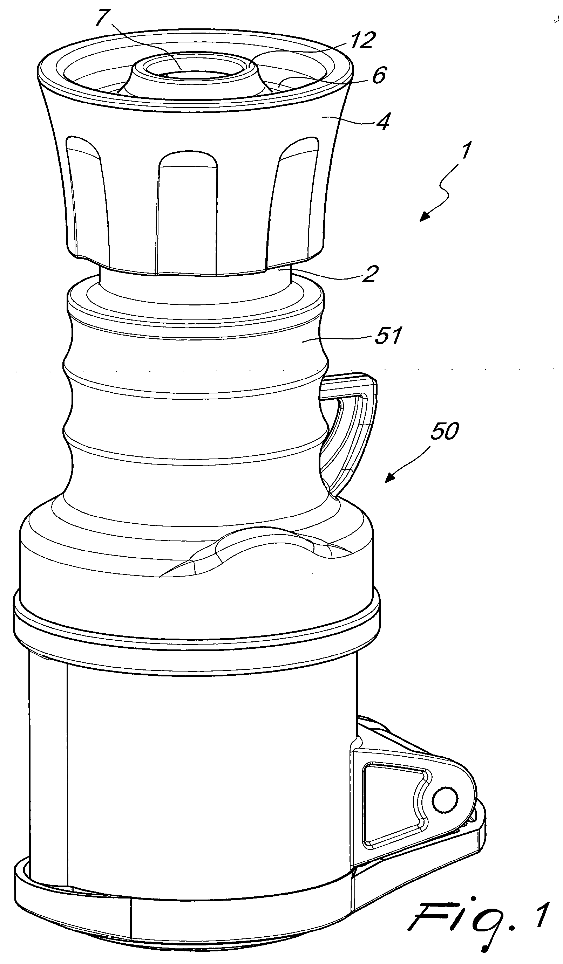

Figure 1 is a perspective view of a socket of the industrial type, provided with the cable gland assembly according to the present invention;

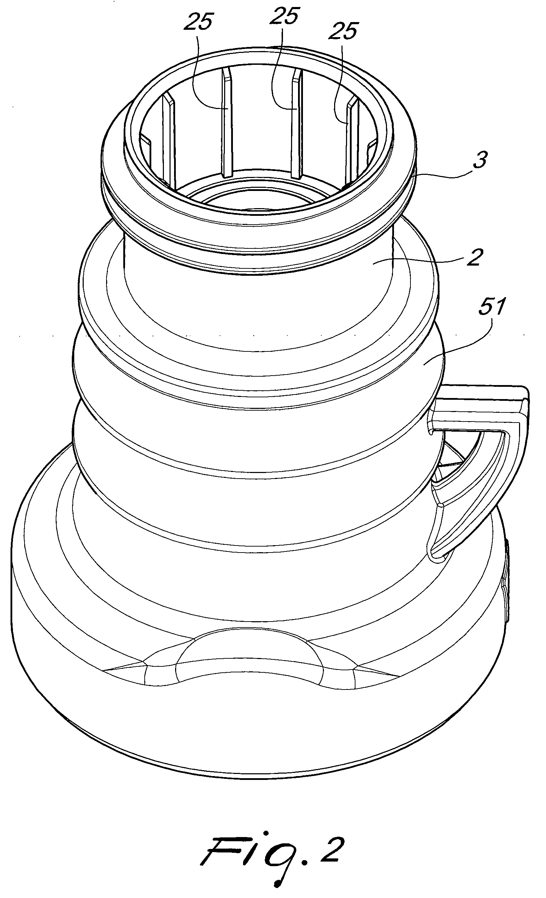

Figure 2 is a perspective view of the grip of the socket of the preceding figure, without the ring;

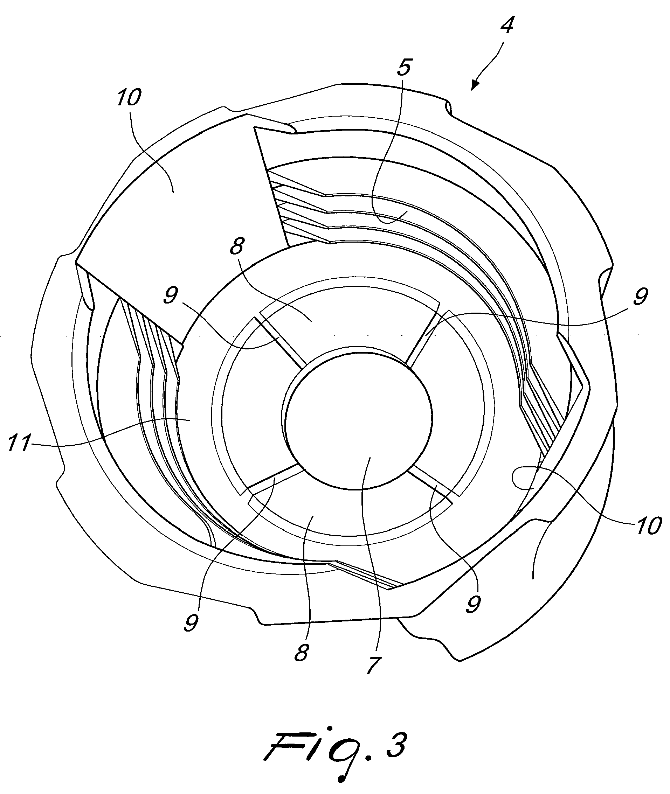

Figure 3 is a perspective view of the inner part of the ring;
Figure 4 is a longitudinally sectioned view of the cable gland assembly;

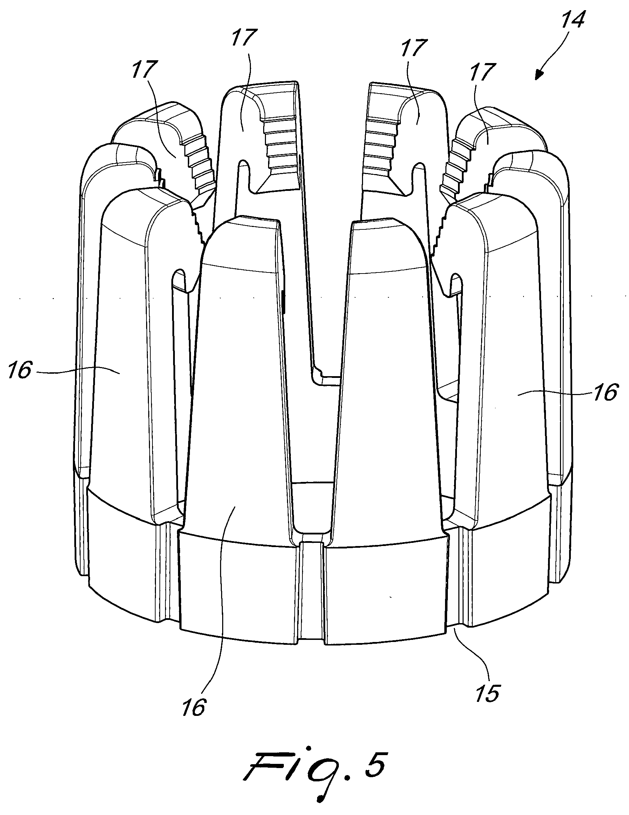

Figure 5 is a perspective view of the cable presser member;

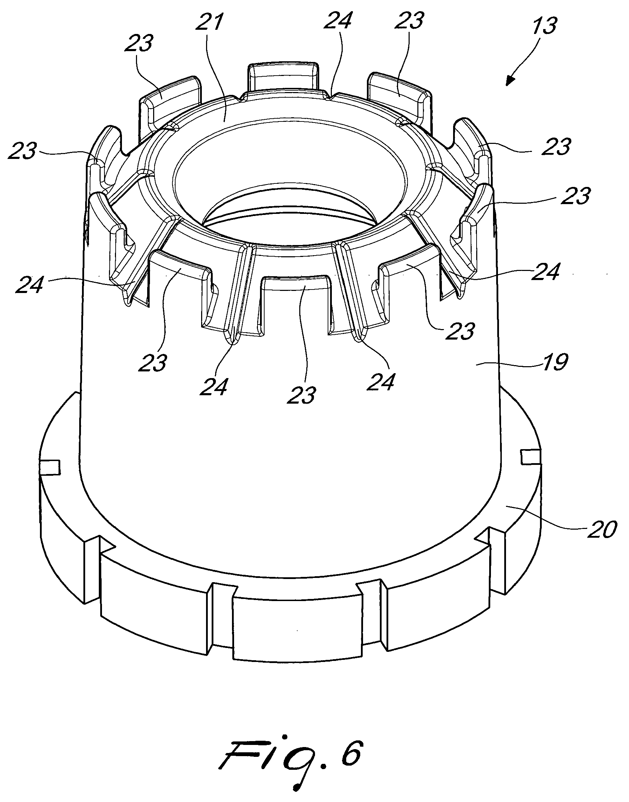

Figure 6 is a perspective view of the gasket;
Figure 7 is a partially sectioned view of the socket provided with the cable gland assembly according to the present invention.

With reference to the cited figures, the cable gland assembly, according to the invention, generally designated by the reference numeral 1, has a cylindrical body 2 provided with a thread 3 that is adapted to engage a ring 4.

The cylindrical body 2 is adapted to accommodate a cable 40, which is connected to the internal components of the device to which the cable gland assembly according to the present invention is applied.

In the example illustrated herein, the device is a socket of the industrial type, designated by the reference numeral 50, which has a grip 51.

The cylindrical body 2 is an integral part of the grip 51.

The ring 4 is constituted by a cylindrical wall that has an open end face and an end face closed by a closure wall 6.

The inner side of the cylindrical wall of the ring 4 is provided with an inner thread 5 that is adapted to engage the thread 3 of the cylindrical body 2.

The closure wall 6 has a central hole 7, which allows the entry of a cable 40 to be connected to the socket.

The inner part of the closure wall 6 has a conical plane 8 provided with anti-slip ribs 9.

The inner thread 5 is interrupted by at least one inclined plane 10; in the illustrated example there are two inclined planes 10 in mutually opposite positions.

An annular plane 11 is provided between the inner thread 5 and the conical plane 8 and acts as a retention member when the ring 4 is screwed onto the cylindrical body 2. The ring 4 has a protrusion 12 at the central hole 7.

The assembly 1 also includes a gasket 13 and a cable presser member 14, which are arranged coaxially within the cylindrical body 2 and the ring 4.

The cable presser member 14 is constituted by an annular member 15 and by a plurality of flexible blades 16 connected monolithically to the annular member 15. Each flexible blade 16 has a tooth-shaped free end 17 that protrudes inward and is adapted to grip the cable.

The gasket 13 is constituted by a cylindrical portion 19, which has an edge 20 and, on the opposite side, a flexible lip 21 that delimits a central inlet 22.

Anti-curl tabs 23 are provided outside the flexible lip 21 and are delimited by bending openings 24.

The gasket 13 is arranged so that the cylindrical portion 19 is inside the cable presser member 14 so that the edge 20 is arranged between the annular member 15 of the cable presser member, and an inner annular edge 18 formed in the cylindrical body 2.

When the ring 4 is tightened onto the cylindrical body 2, the flexible blades 16 are kept in position by the action of the anti-slip ribs 9 on the teeth 17.

The inner surface of the cylindrical body 2, which is in contact with the flexible blades 16 of the cable presser member 14, has a series of axial ribs 25 that have the function of preventing the rotation of the cable presser member and of the gasket 13.

The operation of the cable gland assembly according to the present invention is as follows.

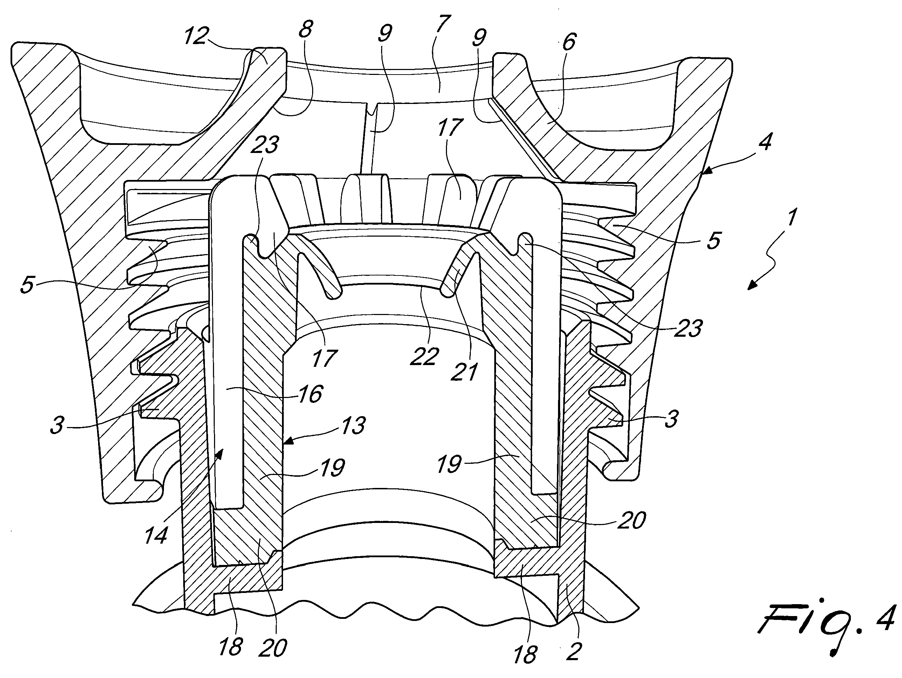

The cable 40 is inserted in the hole 7 of the ring 4, which is in an initial position, shown in Figure 4, in which the ring is screwed only partially onto the cylindrical body 2.

Once wiring has been completed, the ring 4 is screwed onto the cylindrical body 2. The manual operation for screwing the ring 4 moves the ring in an axial direction, moving the conical plane 8 into contact with the tooth-shaped ends 17 of the flexible blades 16, pushing the blades toward the center of the cylindrical body 2.

The flexible blades 16 go against the cable 40, by sliding along the conical plane 8. In this step, the annular member 15, and therefore the entire cable presser member 14, does not rotate, due to the axial ribs 25, and presses the gasket 13 against the cable 40.

Therefore, the cable presser member 14 surrounds the gasket 13, which tightens around the cable 40 by virtue of the screwing of the ring 4.

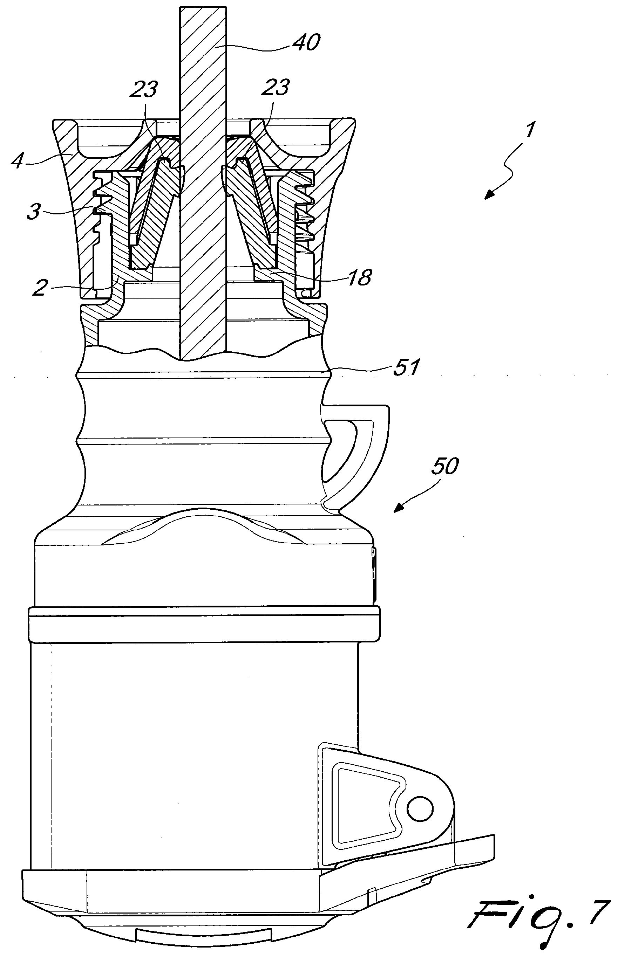

Once the operation for tightening the ring 4 has ended, the gasket 13 adheres perfectly to the cable 40, as shown in Figure 7, and therefore ensures maximum tightness of the system.

In this position, the toothed ends 17 grip firmly the cable 40 due to the pressure provided by the cable presser member 14, thus allowing to retain the cable even when it is subjected to traction.

The substantially conical shape and the excellent flexibility of the flexible lip 21 ensures that it has an ability to dilate that allows the cable gland assembly to accept cables with a wide range of diameters, adapting the pressure of the gasket 13 to the actual dimensions of the cable 40.

This characteristic is increased by the bending openings 24 of the gasket 13 which, during the operation for tightening the ring 4, constitute flexible regions that allow better adaptation to the cable.

The anti-curl tabs 23 of the gasket 13 are located below the tooth-shaped ends 17 of the blades 16, and when the ring 4 is screwed on, the anti-curl tabs 23 are retained in position by the flexible blades 16.

Therefore, the gasket 13 maintains its position, preventing it from rolling up or collapsing due to the friction of the sheath of the cables and allowing to maintain the desired level of tightness.

In practice it has been found that the invention achieves the intended aim and objects, a cable gland assembly having been provided which ensures a high tightness, particularly in use for sockets and plugs of the industrial type.

## Claims

1. A cable gland assembly comprising a cylindrical body **(2)** provided with a thread (3) adapted to engage a ring **(4);** said cylindrical body **(2)** being capable of accommodating a cable **(40)** connected to a device to which said cable gland assembly **(1)** can be applied; said ring **(4)** being constituted by a cylindrical wall having an open end face and an end face closed by a closure wall **(6);** the inner side of the cylindrical wall of said ring **(4)** having an inner thread **(5)** adapted to engage said thread **(3)** of said cylindrical body **(2);** said closure wall **(6)** comprising a central hole **(7);** said cable **(40)** entering said cable gland assembly **(1)** through said central hole **(7);** said closure wall **(6) having** an inner part constituted by a conical plane **(8);** said assembly **(1)** comprising a gasket **(13)** and a cable presser member **(14),** which are at least partially arranged inside said cylindrical body **(2);** said gasket **(13)** and said cable presser member **(14)** being coaxial and occupying an inner space that is defined by said ring **(4)** and is comprised between said conical plane **(8)** and said cylindrical body **(2);** said ring **(4)** being able to translate along an axial direction as a result of a screwing movement on said cylindrical body **(2);** said conical plane **(8)** acting on said cable presser member **(14)** when said ring **(4)** translates axially, imparting a movement along a radial direction to said cable presser **(14)** and tightening said cable presser **(14)** on said cable **(40);** said gasket **(13)** being interposed between said cable presser **(14)** and said cable **(40);** said cable gland assembly **(1)** being **characterized in that** said cable presser member **(14)** comprises an annular member **(15)** and a plurality of flexible blades **(16)** associated monolithically with said annular member **(15);** each of said flexible blades **(16)** having a tooth-shaped free end **(17);** said tooth-shaped ends **(17)** protruding inward and being adapted to grip said cable **(40);** said gasket **(13)** comprises a cylindrical portion **(19)** having an edge **(20)** and, on the opposite side, a flexible lip **(21);** said flexible lip **(21)** delimiting a central inlet **(22);** anti-curl tabs **(23)** being present on the outside of said flexible lip **(21)** and being delimited by bending openings **(24);** during the operation for tightening the ring (4), said bending openings **(24)** constituting flexible regions that allow better adaptation to said cable **(40);** said anti-curl tabs **(23)** of said gasket (13) being located below said tooth-shaped ends **(17)** of said blades **(16),** and when said ring **(4)** is screwed on, said anti-curl tabs **(23)** are retained in position by said flexible blades **(16).**

2. The cable gland assembly according to claim 1, **characterized in that** said inner thread **(5)** of said ring **(4)** is interrupted by at least one inclined plane **(10).**

3. The cable gland assembly according to claim 1, **characterized in that** it comprises an annular plane **(11)** between the inner thread **(5)** and said conical plane **(8)** of said ring **(4);** said annular plane **(11)** acting as a stop member when said ring **(4)** is screwed onto said cylindrical body **(2).**

4. The cable gland assembly according to one or more of the preceding claims, **characterized in that** said ring **(4)** comprises a protrusion **(12)** at said central hole **(7).**

5. The cable gland assembly according to one or more of the preceding claims, **characterized in that** said gasket (13) is arranged with said cylindrical portion (19) inside said cable presser member **(14);** said edge **(20)** being arranged between said annular member **(15)** of said cable presser member **(14)** and an inner annular edge **(18)** formed in said cylindrical body **(2).**

6. The cable gland assembly according to one or more of the preceding claims, **characterized in that** said inner surface of said cylindrical body **(2)** that is in contact with said flexible blades **(16)** of said cable presser member **(14)** comprises a plurality of axial ribs **(25)** that prevent the rotation of said cable presser member **(14)** and of said gasket **(13).**

7. The cable gland assembly according to one or more of the preceding claims, **characterized in that** said conical plane **(8)** of said ring **(4)** comprises anti-slip ribs **(9);** when said ring **(4)** is tightened on said cylindrical body **(2),** said flexible blades **(16)** being held in position by the action of said anti-slip ribs **(9)** on said tooth-shaped ends **(17).**

8. Arrangement comprising a cable gland assembly according to one or more of the preceding claims and the said device to which said cable gland assembly is applied, **characterized in that** said device is an industrial socket/plug **(50)** provided with a grip **(51);** said cylindrical body **(2)** being an integral part of said grip **(51).**

## Patentansprüche

1. Eine Kabelverschraubungsanordnung, die einen zylindrischen Körper (2) umfasst, ausgestattet mit einem Gewinde (3), das ausgebildet ist, um einen Ring (4) zu halten; wobei der zylindrische Körper (2) in der Lage ist, ein Kabel (40) aufzunehmen, das verbunden ist mit einer Vorrichtung, an welcher die Kabelverschraubungsanordnung (1) angebracht werden kann; wobei der Ring (4) aus einer zylindrischen Wand besteht, die eine offene Stirnfläche und eine Stirnfläche hat, die von einer Verschlusswand (6) verschlossen ist; wobei die Innenseite der zylindrischen Wand des Rings (4) ein Innengewinde (5) hat, das ausgebildet ist, um das Gewinde (3) des zylindrischen Körpers (2) zu halten; wobei die Verschlusswand (6) eine zentrale Öffnung (7) umfasst und das Kabel (40) in die Kabelverschraubungsanordnung (1) durch die zentrale Öffnung (7) eintritt; wobei die Verschlusswand (6) einen inneren Teil hat, der aus einer konischen Ebene (8) besteht; wobei die Anordnung (1) einen Dichtungsring (13) und ein Kabel-Pressglied (14) umfasst, die zumindest teilweise innerhalb des zylindrischen Körpers (2) angeordnet sind; wobei die Dichtung (13) und das Kabel-Pressglied (14) koaxial sind und einen Innenraum einnehmen, der durch den Ring (4) bestimmt und zwischen der konischen Ebene (8) und dem zylindrischen Körper (2) eingeschlossen ist; wobei der Ring (4) in der Lage ist, sich infolge einer Schraubbewegung an dem zylindrischen Körper (2) entlang einer axialen Richtung zu bewegen, und die konische Ebene (8) auf das Kabel-Pressglied (14) einwirkt, wenn der Ring (4) sich axial bewegt, wodurch sie dem Kabel-Pressglied (14) eine Bewegung in einer radialen Richtung verleiht und das Kabel-Pressglied (14) an dem Kabel (40) festzieht; wobei die Dichtung (13) zwischen dem Kabel-Pressglied (14) und dem Kabel (40) angeordnet ist; wobei die Kabelverschraubungsanordnung (1) **dadurch gekennzeichnet ist, dass** das Kabel-Pressglied (14) ein ringförmiges Glied (15) und eine Vielzahl biegsamer Flügel (16) umfasst, die monolithisch mit dem ringförmigen Glied (15) verbunden sind; wobei jeder der biegsamen Flügel (16) ein zahnförmiges freies Ende (17) hat und die zahnförmigen Enden (17) mach innen ragen und ausgebildet sind, um das Kabel (40) zu greifen; die Dichtung (13) umfasst einen zylindrischen Abschnitt (19), der eine Kante (20) und, an der gegenüberliegenden Seite, eine biegsame Lippe (21) hat; wobei die biegsame Lippe (21) einen zentralen Einlass (22) begrenzt; wobei Anti-Roll-Laschen (23) an der Außenseite der biegsamen Lippe (21) angebracht und durch Biegeöffnungen (24) begrenzt sind; wobei während der Betätigung zum Festziehen des Rings (4) die Biegeöffnungen (24) flexible Bereiche bilden, die eine bessere Anpassung an das Kabel (40) ermöglichen; wobei die Anti-Roll-Laschen (23) der Dichtung (13) sich unterhalb der zahnförmigen Enden (17) der Flügel (16) befinden und, wenn der Ring (4) aufgeschraubt ist, die Anti-Roll-Laschen (23) von den biegsamen Flügeln (16) an Ort und Stelle gehalten werden.

2. Die Kabelverschraubungsanordnung gemäß Anspruch 1, dadurch gekennzeichet, dass das Innengewinde (5) des Rings (4) durch mindestens eine schräge Ebene (10) unterbrochen wird.

3. Die Kabelverschraubungsanordnung gemäß Anspruch 1, **dadurch gekennzeichnet, dass** sie eine ringförmige Ebene (11) zwischen dem Innengewinde (5) und der konischen Ebene (8) des Rings (4) umfasst, wobei die ringförmige Ebene (11) als Anschlagsglied dient, wenn der Ring (4) auf den zylindrischen Körper (2) aufgeschraubt wird.

4. Die Kabelverschraubungsanordnung gemäß einem oder mehreren der obigen Ansprüche, **dadurch gekennzeichnet, dass** der Ring (4) an der zentralen Öffnung (7) einen Vorsprung (12) umfasst.

5. Die Kabelverschraubungsanordnung gemäß einem oder mehreren der obigen Ansprüche, **dadurch gekennzeichnet, dass** die Dichtung (13) mit dem zylindrischen Abschnitt (19) innerhalb des Kabel-Pressglieds (14) angeordnet ist, wobei die Kante (20) zwischen dem ringförmigen Glied (15) des Kabel-Pressglieds (14) und einer inneren ringförmigen Kante (18) angeordnet ist, die in dem zylindrischen Körper (2) geformt ist.

6. Die Kabelverschraubungsanordnung gemäß einem oder mehreren der obigen Ansprüche, **dadurch gekennzeichnet, dass** die Innenfläche des zylindrischen Körpers (2), die in Kontakt mit den biegsamen Flügeln (16) des Kabel-Pressglieds (14) steht, eine Vielzahl axialer Rippen (25) umfasst, welche die Drehung des Kabel-Pressglieds (14) und der Dichtung (13) verhindern.

7. Die Kabelverschraubungsanordnung gemäß einem oder mehreren der obigen Ansprüche, **dadurch gekennzeichnet, dass** die konische Ebene (8) des Rings (4) Anti-Schlupf-Rippen (9) umfasst, wobei die biegsamen Flügel (16), wenn der Ring (4) an dem zylindrischen Körper (2) festgezogen wird, durch Wirkung der Anti-Schlupf-Rippen (9) an den zahnförmigen Enden (17) an Ort und Stelle gehalten werden.

8. Anordnung, die eine Kabelverschraubungsanordnung gemäß einem oder mehreren der obigen Ansprüche und die Vorrichtung umfasst, an welcher die Kabelverschraubungsanordnung angebracht wird,
**dadurch gekennzeichnet, dass** die Vorrichtung ein(e) gewerbliche(r) Buchse/Stecker (50) ist, die/der mit einem Griff (51) ausgestattet ist, wobei der zylindrische Körper (2) ein integraler Bestandteil des Griffs (51) ist.

## Revendications

1. Ensemble de presse-étoupe comprenant un corps cylindrique (2) pourvu d'un filetage (3) adapté pour venir en prise avec une bague (4) ; ledit corps cylindrique (2) étant capable de renfermer un câble (40) connecté à un dispositif auquel ledit ensemble de presse-étoupe (1) peut être appliqué ; ladite bague (4) étant constituée par une paroi cylindrique ayant une face d'extrémité ouverte et une face d'extrémité fermée par une paroi de fermeture (6) ; le côté intérieur de la paroi cylindrique de ladite bague (4) ayant un filetage intérieur (5) adapté pour venir en prise avec ledit filetage (3) dudit corps cylindrique (2) ; ladite paroi de fermeture (6) comprenant un trou central (7) ; ledit câble (40) entrant dans ledit ensemble de presse-étoupe (1) à travers ledit trou central (7) ; ladite paroi de fermeture (6) ayant une partie intérieure constituée par un plan conique (8) ; ledit ensemble (1) comprenant un joint d'étanchéité (13) et un élément presseur de câble (14), qui sont au moins partiellement agencés à l'intérieur dudit corps cylindrique (2) ; ledit joint d'étanchéité (13) et ledit élément presseur de câble (14) étant coaxiaux et occupant un espace intérieur qui est défini par ledit bague (4) et est compris entre ledit plan conique (8) et ledit corps cylindrique (2) ; ladite bague (4) étant capable de se déplacer le long d'une direction axiale en conséquence d'un mouvement de vissage sur ledit corps cylindrique (2) ; ledit plan conique (8) agissant sur ledit élément presseur de câble (14) quand ladite bague (4) se déplace axialement, en imprimant un mouvement le long d'une direction axiale audit presseur de câble (14) et en serrant ledit presseur de câble (14) sur ledit câble (40) ; ledit joint d'étanchéité (13) étant interposé entre ledit presseur de câble (14) et ledit câble (40) ; ledit ensemble de presse-étoupe (1) étant **caractérisé en ce que** ledit élément de presseur de câble (14) comprend un élément annuaire (15) et une pluralité de lames flexibles (16) associées de manière monolithique audit élément annulaire (15) ; chacune desdites lames flexibles (16) ayant une extrémité libre en forme de dent (17) ; lesdites extrémités en forme de dent (17) dépassant vers l'intérieur et étant adaptées pour saisir ledit câble (40) ; ledit joint d'étanchéité (13) comprend une portion cylindrique (19) ayant un bord (20) et, sur le côté opposé, une lèvre flexible (21) ; ladite lèvre flexible (21) délimitant une entrée centrale (22) ; des languettes anti-incurvation (23) étant présentes sur l'extérieur de ladite lèvre flexible (21) et étant délimitées par des ouvertures d'incurvation (24) pendant l'opération de serrage de la bague (4), lesdites ouvertures d'incurvation (24) constituant des régions flexibles qui permettent une meilleure adaptation audit câble (40) ; lesdites languettes anti-incurvation (23) dudit joint d'étanchéité (13) étant situées au-dessous desdites extrémités en forme de dent (17) desdites lames (16), et quand ladite bague (4) est vissée, lesdites languettes anti-incurvation (23) sont retenues en position par lesdites lames flexibles (16).

2. Ensemble de presse-étoupe selon la revendication 1, **caractérisé en ce que** ledit filetage intérieur (5) de ladite bague (4) est interrompu par au moins un plan incliné (10).

3. Ensemble de presse-étoupe selon la revendication 1, **caractérisé en ce qu'**il comprend un plan annulaire (11) entre le filetage intérieur (5) et ledit plan conique (8) de ladite bague (4) ; ledit plan annulaire (11) agissant comme un élément de butée quand ladite bague (4) est vissée sur ledit corps cylindrique (2).

4. Ensemble de presse-étoupe selon une ou plusieurs des revendications précédentes, **caractérisé en ce que** ladite bague (4) comprend une protubérance (12) au niveau dudit trou central (7).

5. Ensemble de presse-étoupe selon une ou plusieurs des revendications précédentes, **caractérisé en ce que** ledit joint d'étanchéité (13) est disposé avec ladite portion cylindrique (19) à l'intérieur dudit élément presseur de câble (14) ; ledit bord (20) étant disposé entre ledit élément annuaire (15) dudit élément presseur de câble (14) et un bord annulaire intérieur (18) formé dans ledit corps cylindrique (2).

6. Ensemble de presse-étoupe selon une ou plusieurs des revendications précédentes, **caractérisé en ce que** ladite surface intérieur dudit corps cylindrique (2) qui est en contact avec lesdites lames flexibles (16) dudit élément presseur de câble (14) comprend une pluralité de nervures axiales (25) qui empêchent la rotation dudit élément presseur de câble (14) et dudit joint d'étanchéité (13).

7. Ensemble de presse-étoupe selon une ou plusieurs des revendications précédentes, **caractérisé en ce que** ledit plan conique (8) de ladite bague (4) comprend des nervures antidérapantes (9) ; quand ladite bague (4) est serrée sur ledit corps cylindrique (2), lesdites lames flexibles (16) étant maintenues en position par l'action desdites nervures antidérapantes (9) sur lesdites extrémités en forme de dent (1).

8. Agencement comprend un ensemble de presse-étoupe selon une ou plusieurs des revendications précédentes et ledit dispositif auquel ledit ensemble de presse-étoupe est appliqué, **caractérisé en ce que** ledit dispositif est une prise/connecteur individuel (50) pourvu d'une peignée (51) ; ledit corps cylindrique (2) étant partie intégrante de ladite poignée (51).
